# EUROPEAN PATENT SPECIFICATION

(11) **EP 1 947 831 B1**
(45) Date of publication and mention of the grant of the patent: **25.12.2013**
(21) Application number: 06775634.6
(22) Date of filing: 11.09.2006
(51) Int. Cl.: H04M 11/06, H04L 27/00

(54) **METHOD, SYSTEM AND APPARATUS FOR ADJUSTING THE TRANSMIT POWER OF THE DSL TRANSCEIVER**
VERFAHREN, SYSTEM UND VORRICHTUNG ZUM JUSTIEREN DER SENDELEISTUNG DES DSL-SENDERS/-EMPFÄNGERS
MÉTHODE, SYSTÈME ET APPAREIL D AJUSTAGE DE PUISSANCE D ÉMISSION D UN ÉMETTEUR/RÉCEPTEUR DSL

(30) Priority: 08.11.2005 CN 200510117662
(43) Date of publication of application: 23.07.2008
(73) Proprietor: Huawei Technologies Co., Ltd., Longgang District, Shenzhen Guangdong 518129 (CN)
(72) Inventor: ZHOU, Jun, Shenzhen, Guangdong 518129 (CN)
(74) Representative: Thun, Clemens
(86) International application number: PCT/CN2006/002331
(87) International publication number: WO 2007/054000

(56) References cited:
- EP-A- 1 231 733
- WO-A-2005/055580
- CN-A- 1 210 399
- CN-A- 1 655 470
- US-A1- 2003 043 971
- US-B1- 6 647 058

## Description

### Field of the Invention

The present invention relates to the field of communication technologies and in particular to a method, system and apparatus for adjusting transmit power of a digital subscriber line transceiver.

### Background of the Invention

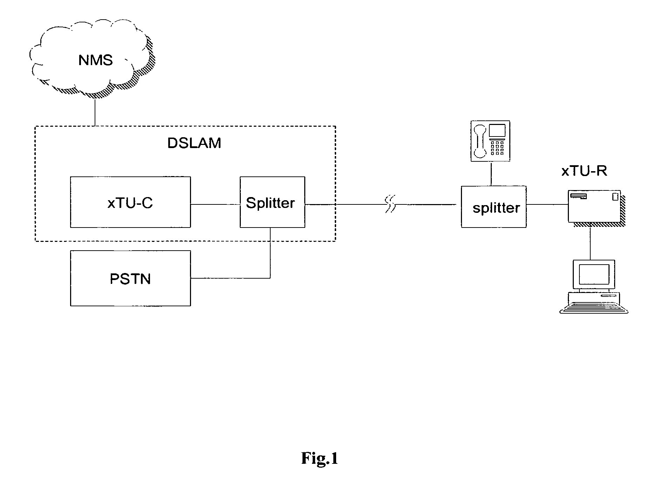

In a communication system, the Digital Subscriber Line (xDSL) access is an access technology widely applied at present. The xDSL access is a high speed data access technology for transmission over an Unshielded Twisted Pair (UTP). The xDSL access involves various specific technical solutions. In addition to Digital Subscriber Lines (DSL) for baseband transmission such as the Internet Digital Subscriber Line (IDSL) and the Single pair High bit rate Digital Subscriber Line (SHDSL), the band-pass transmitted xDSL takes advantages of the frequency division multiplexing technology, so that the xDSL and the Plain Old Telephone Service (POTS) coexist over the same twisted pair. The xDSL service occupies the high frequency band, the POTS occupies the baseband part below 4KHz, and POTS and xDSL signals are separated by a splitter. The band-pass transmitted xDSL adopts the Discrete Multi-Tone (DMT) modulation. A system enabling a multi-access of xDSL is referred to as a DSL access multiplexer (DSLAM), a systematic reference model of which is as illustrated in Figure 1.

Since the xDSL is transmitted over the UTP originally designed for transmission of voice signals, the UTP presents numerous impairment factors to high frequency signals, such as external interference, noise and ambient variations, causing change of a line parameter, and thereby resulting in instability of xDSL operation. Many means, such interleaving and error correction coding, have been adopted in the xDSL technologies to deal with these impairments. Additionally, some dynamic features such as Seamless Rate Adaptation (SRA) have been defined for adapting to change of the channel conditions such as external interference, noise and temperature.

The Seamless Rate Adaptation is implemented as follows. When a line condition degrades and a noise margin of the xDSL link falls below a first predetermined value, the SRA can decrease a line rate automatically to ensure that a bit error ratio and the noise margin can satisfy a communication requirement. When the line condition becomes improved and the noise margin rises beyond a second predetermined value, the SRA can increase the line rate automatically so that the noise margin can be kept within a preset range. The entire adaptation process requires no disconnection for retraining.

However, the seamless rate adaptation also has drawbacks. In a practical application, many operators adopt a fixed-rate operation mode, not permitting to change the line rate. Thus, the SRA does not function. Furthermore, even in the case that the SRA is enabled when the operators restrict the rate range, the noise margin might still exceed the preset threshold when the channel condition improves and the SRA adapts the line rate to the upper limit of the restricted rate range. At this time, the exceeding noise margin results from transmission by a transceiver of power more than required, which may introduce unnecessary crosstalk as well as power consumption.

There is currently another method for dealing with the instability above by defining Power Cut Back (PCB), a target noise margin, a maximum noise margin, a minimum noise margin, power management, etc.

In this method, the PCB can reduce the transmit power in case of a short line. When an actual noise margin is greater than the preset maximum noise margin, a modem may reduce the noise margin subject to the restriction of the maximum noise margin by reducing the transmit power. For example, the ADSL2 may cut the transmit power by up to 40dB, so as to make the noise margin satisfy the restriction of the maximum noise margin, thereby reducing effectively the transmit power in case of restricted- or fixed-rate activation.

However, the PCB method above functions only during training. During showtime of normal operation, transmit power of the transceiver will not be changed. Thus, during showtime of normal operation, the noise margin may still exceed the maximum noise margin due to improvement of the channel (such as noise decreasing). At this time, the transceiver may transmit power more than required, thereby resulting in unnecessary crosstalk and power consumption.

Another existing method is a power management method which introduces an L2 power management mode as defined in the ADSL2. When activating a modem (an L0 mode), the modem may enter the L2 mode with lower power consumption automatically if the user data rate falls below a preset threshold for a period of time exceeding a preset threshold due to some reason (e.g., the subscriber is temporarily absent from his computer). At this time, the line is kept for connection at a lower rate. The system can enter the L0 mode automatically if the data rate of the subscriber rises.

However, this power management method is primarily focused on whether the subscriber is actually online and adjusts transmit power of the transceiver based upon the data traffic of the subscriber. The transceiver may still transmit excessive power even in the L0 mode, thereby resulting in unnecessary crosstalk.

WO 2005/055580 A1 discloses an optical network unit comprises data structures in the form of managed entities that are issued by the optical network unit for managing each of the xDSL connections. Each managed entity is associated with one or more network features and comprises one or more elements further comprising relationships to other managed entities, attributes, actions, and notifications.

EP 1231733 A1 discloses a method for controlling the transmission power for a session in a system for transmitting data via a telephone line by using a digital subscriber line between a user terminal and a central unit. In the method, the transmission power is increased or decreased between given limit values so that the power is kept as low as possible, while still providing sufficient transmission quality.

US 2003/043971 A1 discloses ADSL communication method for interconnecting a user and a center by using a 2-wire telephone line and a DSL communications technology so that the user and the center perform an intercommunication.

### Summary of the Invention

In view of above, according to embodiments of the invention, there is provided a method, system and apparatus for adjusting transmit power of a digital subscriber line transceiver, which can minimize transmit power of the transceiver and further reduce line crosstalk and apparatus power consumption while satisfying a rate and a noise margin required for a subscriber.

The object of the invention can be achieved by the following technical solutions.

A method for adjusting transmit power of a digital subscriber line transceiver includes:
configuring an upshift noise margin, a downshift noise margin, a target noise margin, an upshift time interval and a downshift time interval prior to initialization of transceivers, wherein the upshift noise margin is an upper limit of the noise margin threshold and the downshift noise margin is a lower limit of the noise margin threshold, wherein the transceivers include a first transceiver located at one of a CO and a CPE and a second transceiver located at the other of the CO and the CPE;
obtaining and comparing a noise margin at the first transceiver with the upshift noise margin and the downshift noise margin; and
calculating, at the first transceiver, an adjustment amount of transmit power when the noise margin falls below the downshift noise margin for the downshift time interval or rises above the upshift noise margin for the upshift time interval, wherein the process of calculating the adjustment amount of transmit power comprising: calculating a new gain from a current bit allocation and gain table, a current noise margin, the upshift noise margin, and the downshift noise margin;
sending the adjustment amount of transmit power from the first transceiver to the second transceiver so that the second transceiver can adjust signal transmit power according to the adjustment amount;
receiving an indication of trigger signal from the second transceiver at the first transceiver after sending the adjustment amount of transmit power including the new gain from the first transceiver to the second transceiver;
executing, at the first DSL transceiver, demodulation using the new gain upon receiving of the trigger signal.

The following technical solutions of the method are optional.

Upon determining that the noise margin arises above the upshift noise margin by comparing, the method includes:
enabling a timer to start timing at the first transceiver when its noise margin rises above an upshift noise margin;
generating a trigger signal if the noise margin stays above the upshift noise margin when the timer reaches the upshift timer interval;
clearing the timer and calculating and sending, by the first transceiver, a adjustment amount of transmit power to the second transceiver in response to the trigger signal so that the second transceiver decreases the signal transmit power according to the adjustment amount of transmit power.

The process of adjusting transmit power includes:
if the timer does not exceed an upshift time interval, no trigger signal is generated and no power adjustment is calculated and sent.

The process of adjusting transmit power includes:
enabling a timer to start timing when the noise margin falls below a downshift noise margin;
sending a trigger signal if the noise margin stays below the downshift noise margin when the timer reaches a downshift timer interval;
clearing the timer and calculating, by the first transceiver, an adjustment amount of transmit power to the second transceiver in response to the trigger signal; and
sending the adjustment amount of transmit power from the first transceiver to the second transceiver, so that the second transceiver increases the signal transmit power according to the adjustment amount of transmit power.

The process of adjusting transmit power includes:
if the timer value does not exceed the downshift time interval, no trigger signal is generated and no power adjustment amount is calculated and sent.

When signal transmit power is required to be upshifted, if the adjusted signal transmit power spectrum density (PSD) exceeds a PSD mask or the transmit power exceeds the aggregate transmit power restriction, signal transmit power is adjusted to the PSD mask or the aggregate transmit power restriction or a retraining is initiated.

The method according to embodiments of the invention is based upon discrete multi-tone modulation, and is applicable in the field of the second generation asymmetric digital subscriber line (ADSL2) or the second generation asymmetric digital subscriber line with an extended downlink bandwidth (ADSL2+), and is also applicable in the fields of the very high speed digital subscriber line (VDSL) and the second generation very high speed digital subscriber line (VDSL2).

According to embodiments of the invention, there is further provided a system for adjusting transmit power of a digital subscriber line transceiver including:
a parameter configuration module at the one of the CO and the CPE adapted to receive and store an upshift noise margin, a downshift noise margin, a target noise margin, an upshift time interval and a downshift time interval in advance, wherein the upshift noise margin is an upper limit of the noise margin threshold and the downshift noise margin is a lower limit of the noise margin threshold;
a signal sending means at one of a CO and a CPE adapted to send a signal to a line and a signal receiving means at the other of the CO and CPE adapted to receive the signal from the line;
a noise margin obtaining means at the one of the CO and the CPE adapted to obtain information on a noise margin of the signal received by the receiving means;
a comparator at the one of the CO and the CPE adapted to compare the noise margin obtained by the noise margin obtaining means with the upshift noise margin and the downshift noise margin stored in the parameter configuration module at the one of the CO and the CPE;
a timer adapted at the one of the CO and the CPE to time in response to the trigger from the comparator and to trigger an adjusting means when the timer reaches the upshift time interval or the downshift time interval;
the adjusting means at the one of the CO and the CPE adapted to calculate and send an adjustment amount of transmit power to the other of the CO and the CPE to enable the sender to adjust signal transmit power according to the adjustment amount, wherein the adjusting means is adapted to calculate a new gain from a current bit allocation and gain table, a current noise margin, the upshift noise margin, and the downshift noise margin; and
an executing means at the other of the CO and the CPE adapted to adjust signal transmit power according to the adjustment amount received by the other of the CO and the CPE, and to transmit an indication of trigger signal from the other of the CO and the CPE at the one of the CO and the CPE so that the one of the CO and the CPE execute demodulation using the new gain upon the receiving of the trigger signal.

The following technical solutions of the system are optional.

According to embodiments of the invention, there is further provided a transceiver including:
a noise margin obtaining means adapted to obtain a noise margin of a signal received by a receiving means;
a comparator adapted to compare the obtained noise margin with a preconfigured noise margin threshold stored in a parameter configuration module;
a timer adapted to trigger an adjusting means when determining that a period of time for which the noise margin of the received signal stays beyond the noise margin threshold reaches a predetermined value;
a parameter configuration module adapted to receive and store an upshift noise margin, a downshift noise margin, a target noise margin, an upshift time interval and a downshift time interval, wherein the upshift noise margin is an upper limit of the noise margin threshold and the downshift noise margin is a lower limit of the noise margin threshold;

the adjusting means adapted to calculate and send an adjustment amount of transmit power to an opposite transceiver to enable the opposite transceiver to adjust signal transmit power according to the adjustment amount, wherein the adjusting means is adapted to calculate a new gain from a current bit allocation and gain table, a current noise margin, the upshift noise margin, and the downshift noise margin;

wherein the transceiver is adapted to receive a trigger signal after the adjusting means sends the adjustment amount and to execute demodulation using the new gain upon receiving the trigger signal.

As can be seen from the technical solutions above according to embodiments of the invention, transmit power of the transceiver is enabled to be adjusted as the noise margin varies, ensuring stability and a low bit error rate of data transmission, while minimizing transmit power of the transceiver and reducing line crosstalk.

### Brief Description of the Drawings

Figure 1 illustrates a reference model of a Digital Subscriber Line xDSL system;

Figure 2 illustrates a block diagram of logic functions in seamless rate adaptation;

Figure 3 illustrates a schematic diagram of noise adjustment in seamless rate adaptation; and

Figure 4 illustrates an operational flow diagram of seamless rate adaptation.

### Detailed Description of the Invention

According to embodiments of the invention, a noise margin of a received signal is obtained, and the noise margin of the received signal is adjusted by adjusting transmit power of the signal, so as to minimize transmit power of a transceiver and further reduce crosstalk and apparatus power consumption by adjusting transmit power of the transceiver in response to change of a line condition (such as insertion loss and background noise) while satisfying a rate and a noise margin required for a subscriber. Further, unnecessary adjustment of transmit power due to rapidly changing noise or the like can be avoided.

A technical solution of adjusting transmit power of a transceiver according to embodiments of the invention can be referred to as a Seamless dynamic Transmit power Adjustment (STPA) technology. The clew of the STPA lies in that a noise margin is kept within a certain range by adjusting transmit power when a line condition changes.

The method and system according to embodiments of the invention will be further described in details below with reference to the drawings.

The following parameters are introduced in the invention.

Target noise margin (TMGN) of a line;

Upshift noise margin (UMGN);

Downshift noise margin (DMGN);

Upshift time interval (USHTI); and

Downshift time interval (DSHTI).

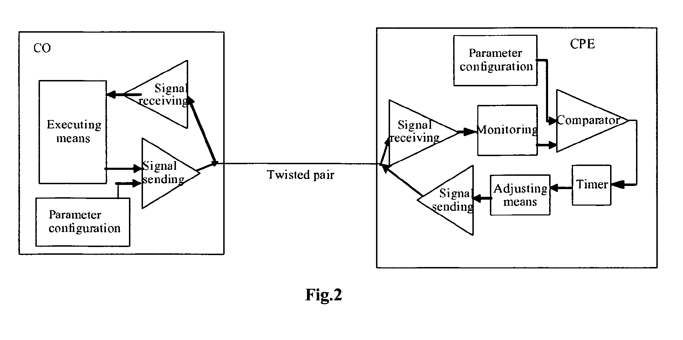

The method and system according to embodiments of the invention will be described below with reference to Figure 2, taking it as an example that the STPA is implemented for a downlink signal between a Central Office (CO) and a Customer Premise Equipment (CPE). In Figure 2, the system for adjusting transmit power of a digital subscriber line transceiver is divided into two major parts: a Central Office (CO) and a Customer Premise Equipment (CPE).

The CO includes a signal receiving means, a signal sending means, an executing means and a parameter configuration means.

The signal receiving means is adapted to receive a signal from a line and the signal sending means is adapted to send a signal to the line.

The parameter configuration means is adapted to receive and store an upper limit of a noise margin threshold, i.e. an upshift noise margin, and a lower limit of the noise margin threshold, i.e. a downshift noise margin, a target noise margin, an upshift time interval as the time threshold of the noise margin exceeds the upshift noise margin, and a downshift time interval as the time threshold of the noise margin exceeds the downshift noise margin, which are configured in advance.

The executing means is adapted to execute power adjustment when receiving a transmit power adjustment amount sent from the CPE.

The CPE includes a signal receiving means, a signal sending means, a noise margin obtaining means, a parameter configuration means, a comparator, a timer and an adjusting means.

Operations executed by the signal receiving means and the signal sending means in the CPE are identical to those of the signal receiving means and the signal sending means in the CO, i.e. receiving a signal from the line and sending a signal to the line.

The parameter configuration means of the CPE is adapted to receive from CO and store the upshift noise margin, the downshift noise margin, the target noise margin, the upshift time interval and the downshift time interval, which are configured in advance.

The noise margin obtaining means is adapted to obtain and output a noise margin of the signal received by the signal receiving means. The noise margin obtaining means can obtain the noise margin of the received signal by real time monitoring, periodically monitoring, etc.

The comparator is adapted to compare the obtained noise margin from the noise margin obtaining means with the preconfigured upshift noise margin and the downshift noise margin stored in the parameter configuration module of the CPE and to trigger the timer to start timing when the obtained noise margin from the noise margin obtaining means is not less than the upshift noise margin or is not greater than the downshift noise margin. The comparator is also adapted to stop the timer from timing and clear the timer when the obtained noise margin from the noise margin obtaining means is less than the upshift noise margin or greater than the downshift noise margin.

The timer is adapted to start timing in response to the trigger from the comparator and to trigger the adjusting means when a timing value reaches a predetermined value.

The adjusting means is adapted to calculate an adjustment amount of transmit power for the transceiver at the CO in response to the trigger from the timer and to send the adjustment amount to the central office so that the central office can adjust transmit power of the transceiver according to the adjustment amount.

An operational flow of the system for adjusting transmit power of a digital subscriber line transceiver according to embodiments of the invention is described as follows.

Prior to initialization of the CO and the CPE, parameters including a target noise margin (TMGN), an upshift noise margin (UMGN), a downshift noise margin (DMGN), an upshift time interval (USHTI) and a downshift time interval (DSHTI) are set in compliance with a relationship of UMGN>TMGN>DMGN.

The system will initialize and enter showtime mode subject to the preset parameters. The noise margin obtaining means of the CPE monitors a noise margin (NMGN) of a signal received by the CPE, and the comparator compares the NMGN with the upshift noise margin and the downshift noise margin stored in the configuration parameter module. If the NMGN goes beyond the range delimited by the UMGN and the DMGN, the comparator triggers the timer to start timing. The timer is cleared if the NMGN comes back within the range delimited by the UMGN and the DMGN during timing of the timer.

When the timing of the timer goes beyond the downshift time interval (DSHTI) stored in the configuration parameter module, the adjusting means calculates a new bit allocation and gain (Bi&Gi) from current Bi&Gi tables, the current NMGN, and the preset UMGN and DMGN, and sends new Bi&Gi to the CO through the signal sending means. The adjusting means can also calculate a Power Cut Back (PCB) value, which is uniform for each tone or sub-carrier, and sends the PCB to the CO through the signal sending means.

After the CO receives the new Bi&Gi through the signal receiving means, the executing means adjusts transmit power according to the Bi&Gi adjustment signal. The executing means sends trigger signal to indicate the switching to the new Bi&Gi. After receiving the showtime indication signal, the CPE will execute demodulation using the new Bi&Gi upon the indication of trigger signal. The trigger information can be synch symbol in ADSL2/2+, for example.

After the CO receives new PCB through the signal receiving means, the executing means adjusts a power spectrum density of a signal transmitted from the transceiver. The executing means sends a trigger signal as a synchronous signal to indicate the CPE the new power spectrum density will come into effect. The receiver CPE will execute demodulation using the new PSD upon the receiving of the indication of trigger signal. The trigger information can be synch symbol in ADSL2/2+, for example.

According to embodiments of the invention, the STPA can also be implemented for an uplink signal between the Central Office (CO) and the Customer Premise Equipment (CPE). The implementation of STPA for an uplink signal is analogous to that for a downlink signal, and will no more be described here.

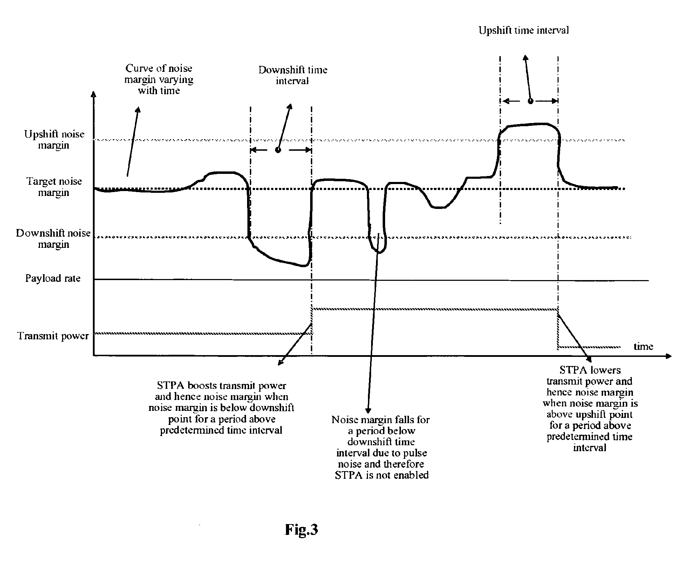

As can be seen from Figure 3, when a channel feature, such as ambient temperature and humidity, or noise changes, the noise margin also varies with time. The system adjusts signal transmit power of the transceiver according to a range over which the noise margin varies. When the noise margin falls below the downshift noise margin, the timer starts timing. If this situation lasts beyond the downshift time interval, the adjusting means increases transmit power, i.e. Gi, and sends a new Bi&Gi table to the sender such as the CO. Both the sender and the receiver are switched to the new Bi&Gi table concurrently after a predetermined period of time elapses.

When the channel feature becomes improved so that the noise margin rises above the upshift noise margin, the timer starts timing. If the timing value of the timer goes beyond the upshift timer interval while the noise margin is kept beyond the upshift noise margin, the adjusting means lowers transmit power, i.e. Gi, and sends a new Bi&Gi table to the sender. Both the sender and receiver are switched to the new Bi&Gi table after a predetermined period of time elapses.

If the noise margin falls due to pulse noise or the like, the timer is reset and it does not send out any trigger signal and the STPA does not function because the pulse noise lasts transitorily.

As described above with reference to Figure 3, the sender adjusts signal transmit power by adjusting the Bi&Gi table. Alternatively, the sender can adjust signal transmit power through PCB.

It is not necessary to interrupt any ADSL service throughout the implementation of the invention. Therefore, ADSL service of the customer can be considered seamless.

In a technical solution according to embodiments of the invention, a channel for transmission of a message can be a channel for transmission of an Embedded Operation Channel (EOC) message of the ADSL2. Signal transmit power can be adjusted by adjusting Gi only or both Bi and Gi. If Gi is adjusted only, the receiver may send only new Gi to the sender. Thus, the message transmission time can be saved, and a responding speed of the sender adjusting signal transmit power can be accelerated, thereby improving robustness of the system.

There are two main Gi adjustment schemes. One scheme is flat adjustment, i.e. power of all the sub-carriers is increased or lowered concurrently by the same amount, and this adjustment scheme is simple to be implemented. The other scheme adopts a preset weighting rule that different adjustment amplitudes are applied to different sub-carriers, and this adjustment scheme may possibly change a Bi table.

For the flat adjustment, the adjustment amplitude of signal transmit power can be calculated from the following equation:

20 logGi'=20 logGi - (NMGN-TMGN).

The solutions of adjusting signal transmit power according to embodiments of the invention can also be applied in combination with another Power Spectrum Density (PSD) mask. For example, when signal transmit power is required to be upshifted, if the adjusted power exceeds upper limit of the PSD mask or an overall power restriction, the PSD mask and the overall power restriction can be used as an upper limit of adjusting signal transmit power. Alternatively, transmit power can be adjusted with retraining if the adjusted power exceeds the PSD mask or the overall power restriction. In a practical application, whether the PSD mask and the overall power restriction are used as an upper limit of adjusting signal transmit power or the transmit power is adjusted with retraining can be decided dependent upon a practical demand of an operator.

The invention is based upon Discrete Multi-Tone (DMT) modulation, is applicable in the field of the second generation asymmetric digital subscriber line or the second generation asymmetric digital subscriber line with an extended downlink bandwidth, and also is applicable in the fields of the very high speed digital subscriber line and the second generation very high speed digital subscriber line.

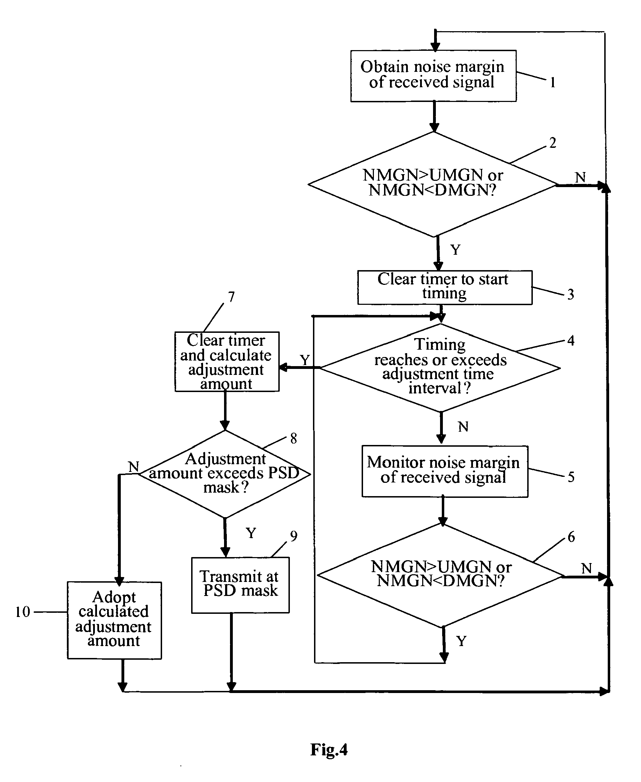

A specific STPA flow according to embodiments of the invention will be described below with reference to Figure 4.

Block 1: The noise margin obtaining means monitors a noise margin of a received signal.

Block 2: The comparator compares a monitoring result with the upshift noise margin (UMGN) and the downshift noise margin (DMGN) configured in advance in the parameter configuration module to determine whether the condition of NMGN>UMGN or NMGN<DMGN holds true, and executes the following operations according to a determination result.

If the condition holds true, it indicates that the noise margin goes beyond the allowable range, and at this time, the flow goes to the Block 3 where the comparator triggers the timer and the timer is cleared and starts timing.

If the condition does not hold true, it indicates that the noise margin is within the allowable range, and at this time, the comparator does not trigger the timer and the flow goes to the Block 1, continuing with obtaining a noise margin and with subsequent comparison.

Block 3: After the timer is triggered, the timer is cleared and starts timing. The timing value of the timer indicates a period of time for which the noise margin of the signal stays beyond the allowable noise margin range.

Block 4: It is determined whether the timing value of the timer reaches or exceeds either of the adjustment time intervals preset in the parameter configuration module. If the timing value reaches or exceeds either of the adjustment time intervals, the flow goes to the step 7. Otherwise, the flow goes to Block 5, continuing with monitoring a noise margin of a received signal.

Change of the noise margin due to pulse noise is transitory, and the noise margin can come back within the allowable range quickly. Therefore, it is not necessary to adjust signal transmit power if the period of time for which the noise margin stays beyond the allowable noise margin range is transitory. Thus, at Block 5, if the noise margin goes beyond the allowable noise margin range for a period of time which does not reach either of the preset time intervals, the flow continues with monitoring a noise margin of a received signal, and then goes to Block 6.

Block 6: The comparator compares a monitoring result with the upshift noise margin and the downshift noise margin configured in advance in the parameter configuration module to determine whether the condition of NMGN>UMGN or NMGN<DMGN holds true.

If the condition holds true, it indicates that the noise margin stays beyond the allowable range. The timer continues with timing, and the flow goes to Block 4, continuing with determining whether the timing value of the timer reaches or exceeds either of the adjustment time intervals preset in the parameter configuration module.

If the condition does not hold true, it indicates that the noise margin is within the allowable range. The flow goes back to Block 1, obtaining a noise margin and continuing with subsequent comparison.

The descriptions above have been made to the flow in the case that the timing value of the timer does not reach either of the adjustment time intervals preset in the parameter configuration module in Block 4. Descriptions will be made below to the flow in the case that the timing value of the timer reaches either of the adjustment time intervals preset in the parameter configuration module.

If the timing value of the timer reaches either of the adjustment time intervals preset in the parameter configuration module, the flow goes to Blocks 7 to 10.

Block 7: When the timing of the timer reaches or exceeds either of the time intervals, the timer is cleared while starting the adjusting means to calculate an adjustment amount of signal transmit power.

Block 8: It is determined whether the adjustment amount calculated at Block 7 exceeds the PSD mask. If the adjustment amount exceeds the PSD mask, the flow goes to Block 9. Otherwise, the flow goes to Block 10.

Block 9: The receiver sends the PSD mask to the sender. Thus, the sender adjusts signal transmit power according to the PSD mask. The present process of adjusting signal transmit power is ended, and the flow goes back to Block 1, continuing with monitoring a noise margin of a received signal.

At Block 8, the adjustment amount is compared with the PSD mask because the PSD mask is an upper limit determined for adjusting signal transmit power. Transmit power will be adjusted if this upper limit is exceeded.

Block 10: The receiver sends the calculated adjustment amount to the sender. Thus, the sender adjusts signal transmit power according to the calculated adjustment amount. The present process of adjusting signal transmit power is ended, and the flow goes back to Block 1, continuing with monitoring a noise margin of a received signal.

The flows above show a complete STPA operational flow.

Since there is a simple calculation relationship between a signal-to-noise ratio and a noise margin, the technical solutions above according to embodiments of the invention can also be modified to adjust transmit power based upon a signal-to-noise ratio. When transmit power is adjusted based upon a signal-to-noise ratio, the basic implementation principle is substantially the same as that for adjusting transmit power based upon a noise margin except that the threshold of the noise margin is modified to be that of the signal-to-noise ratio. In other words, when a period of time for which the signal-to-noise ratio of a received signal stays beyond the threshold of the signal-to-noise ratio, signal transmit power is adjusted so that the signal-to-noise ratio of the received signal is adjusted into the preset signal-to-noise ratio range, which will no more be described here.

The transceiver according to embodiments of the invention includes a noise margin obtaining means, a comparator, a timer, an adjusting means and an executing means. Operations executed by the respective elements in the transceiver are as described in the embodiments above.

The foregoing descriptions are merely illustrative of the preferred embodiments of the invention, and the scope of the invention shall not be limited to those descriptions. Any variations or alternatives which will readily occur to those skilled in the art shall come into the scope of the invention as defined in the appended claims.

## Claims

1. A method for adjusting transmit power of a digital subscriber line transceiver, comprising:
configuring an upshift noise margin, a downshift noise margin, a target noise margin, an upshift time interval and a downshift time interval prior to initialization of transceivers, wherein the upshift noise margin is an upper limit of a noise margin threshold and the downshift noise margin is a lower limit of the noise margin threshold, wherein the transceivers include a first transceiver located at one of a central office, CO, and a customer premise equipment, CPE, and a second transceiver located at the other of the CO and the CPE;
obtaining and comparing a noise margin at the first transceiver with the upshift noise margin and the downshift noise margin(1, 2); **characterized by**:
calculating, at the first transceiver, an adjustment amount of transmit power when the noise margin falls below the downshift noise margin for the downshift time interval or rises above the upshift noise margin for the upshift time interval (4, 7), wherein the process of calculating the adjustment amount of transmit power comprising: calculating a new gain from a current bit allocation and gain table, a current noise margin, the upshift noise margin, and the downshift noise margin; and
sending the adjustment amount of transmit power from the first transceiver to the second transceiver so that the second transceiver can adjust signal transmit power according to the adjustment amount (10);
receiving an indication of trigger signal from the second transceiver at the first transceiver after sending the adjustment amount of transmit power including the new gain from the first transceiver to the second transceiver;
executing, at the first transceiver, demodulation using the new gain upon receiving of the trigger signal.

2. The method according to claim 1, wherein the process of calculating, at the first transceiver, an adjustment amount of transmit power further comprising:
calculating, at the first transceiver, a new bit allocation as well as the new gain from the current bit allocation and gain table, the current noise margin, the upshift noise margin, and the downshift noise margin.

3. The method according to claim 1 or 2, wherein the adjustment amount of transmit power is uniform for sub-carriers each.

4. The method according to claim 1 or 2, wherein the process of calculating, at the first transceiver, an adjustment amount of transmit power comprises:
calculating, at the first transceiver, different adjustment amplitudes of gain applied to different sub-carriers adopting a preset weighting rule.

5. The method according to claim 3, wherein the new gain is calculated in the following equation: 20logGi'=20logGi-(NMGN-TMGN), where Gi' represents the new gain, Gi represents the current gain, NMGN represents the current noise margin, and the TMGN represents the target noise margin.

6. The method according to claim 1 or 2, wherein upon determining that the noise margin arises above the upshift noise margin by comparing, the method comprises:
enabling a timer to start timing at the first transceiver when its noise margin rises above the upshift noise margin (3);
generating a trigger signal if the noise margin stays above the upshift noise margin when the timer reaches the upshift timer interval (4);
clearing the timer and calculating (7) and sending, by the first transceiver, the adjustment amount of transmit power to the second transceiver in response to the trigger signal, so that the second transceiver decreases the signal transmit power according to the adjustment amount of transmit power.

7. The method according to claim 1 or 2, wherein upon determining that the noise margin falls below the downshift noise margin by comparing, the method comprises:
enabling a timer to start timing at the first transceiver when the noise margin falls below the downshift noise margin (3);
sending a trigger signal if the noise margin stays below the downshift noise margin when the timer reaches a downshift timer interval (4);
clearing the timer and calculating an adjustment amount of transmit power in response to the trigger signal at the first transceiver (7); and
sending the adjustment amount of transmit power from the first transceiver to the second transceiver so that the second transceiver to increase the signal transmit power according to the adjustment amount.

8. The method according to claim 1 or 2, wherein when the adjustment amount exceeds an upper limit of a power spectrum density mask or an overall power restriction, the method comprises:
sending the upper limit of the power spectrum density mask or the overall power restriction from the first transceiver to the second transceiver, so that the second transceiver can adjust signal transmit power according to the upper limit (8, 9).

9. The method according to claim 1 or 2, wherein the method is based upon discrete multi-tone modulation.

10. A system for adjusting transmit power of a digital subscriber line transceiver, comprising:
a signal sending means at one of a central office, CO, and a customer premise equipment, CPE, adapted to send a signal to a line and a signal receiving means at the other of the CO and CPE adapted to receive the signal from the line;
a noise margin obtaining means at the one of the CO and the CPE adapted to obtain information on a noise margin of the signal received by the receiving means; **characterized by** comprising:
a parameter configuration module at the one of the CO and the CPE adapted to receive and store an upshift noise margin, a downshift noise margin, a target noise margin, an upshift time interval and a downshift time interval in advance, wherein the upshift noise margin is an upper limit of a noise margin threshold and the downshift noise margin is a lower limit of the noise margin threshold;
a comparator at the one of the CO and the CPE adapted to compare the noise margin obtained by the noise margin obtaining means with the upshift noise margin and the downshift noise margin stored in the parameter configuration module at the one of the CO and the CPE and to trigger a timer to start timing when the obtained noise margin from the noise margin obtaining means is not less than the upshift noise margin or is not greater than the downshift noise margin;
a timer at the one of the CO and the CPE adapted to time in response to the trigger from the comparator and to trigger an adjusting means at the one of the CO and the CPE when the timer reaches the upshift time interval or the downshift time interval;
the adjusting means is adapted to calculate and send an adjustment amount of transmit power to the other of the CO and the CPE to enable the other of the CO and the CPE to adjust signal transmit power according to the adjustment amount, wherein the adjusting means is adapted to calculate a new gain from a current bit allocation and gain table, a current noise margin, the upshift noise margin, and the downshift noise margin; and
an executing means at the other of the CO and the CPE adapted to adjust signal transmit power according to the adjustment amount received by the other of the CO and the CPE , and to transmit an indication of trigger signal from the other of the CO and the CPE to the one of the CO and the CPE so that the one of the CO and the CPE execute demodulation using the adjustment amount upon the receiving of the trigger signal.

11. The system according to claim 10, wherein the adjusting means is adapted to calculate a new bit allocation as well as the new gain from the current bit allocation and gain table, the current noise margin, the upshift noise margin, and the downshift noise margin.

12. A transceiver, comprising:
a noise margin obtaining means adapted to obtain a noise margin of a signal received by a receiving means; and **characterized by**:
a parameter configuration module adapted to receive and store an upshift noise margin, a downshift noise margin, a target noise margin, an upshift time interval and a downshift time interval in advance, wherein the upshift noise margin is an upper limit of the noise margin threshold and the downshift noise margin is a lower limit of the noise margin threshold;
a comparator adapted to compare the obtained noise margin with the upshift noise margin and the downshift noise margin stored in a parameter configuration module;
a timer adapted to time in response to the trigger from the comparator and to trigger an adjusting means when the timer reaches the upshift time interval or the downshift time interval;
the adjusting means adapted to calculate and send an adjustment amount of transmit power to an opposite transceiver to enable the opposite transceiver to adjust signal transmit power according to the adjustment amount, wherein the adjusting means is adapted to calculate a new gain from a current bit allocation and gain table, a current noise margin, the upshift noise margin, and the downshift noise margin;
wherein the transceiver is adapted to receive a trigger signal after the adjusting means sends the adjustment amount and to execute demodulation using the new gain upon receiving the trigger signal.

13. The transceiver according to claim 12, wherein the adjusting means is adapted to calculate a new bit allocation as well as the new gain from the current bit allocation and gain table, the current noise margin, the upshift noise margin, and the downshift noise margin.

## Patentansprüche

1. Verfahren zum Justieren der Sendeleistung eines Senders/Empfängers des digitalen Teilnehmeranschlusses, umfassend
Konfigurieren einer "Upshift"-Rauschreserve, einer "Downshift"-Rauschreserve, einer Zielrauschreserve, eines "Upshift"-Zeitintervalls und eines "Downshift"-Zeitintervalls vor der Initialisierung von Sendern/Empfängern, wobei die "Upshift"-Rauschreserve eine Obergrenze für eine Rauschreserveschwelle ist und die "Downshift"-Rauschreserve eine Untergrenze für eine Rauschreserveschwelle ist, wobei die Sender/Empfänger einen ersten Sender/Empfänger, der sich in einem von Vermittlungsstelle CO und Teilnehmereinrichtung CPE befindet, und einen zweiten Sender/Empfänger, der sich in dem anderen von CO und CPE befindet, umfassen; Erhalten und Vergleichen einer Rauschreserve in dem ersten Sender/Empfänger mit der "Upshift"-Rauschreserve und der "Downshift"-Rauschreserve (1, 2); **gekennzeichnet durch**
Berechnen eines Justierungsbetrags der Sendeleistung in dem ersten Sender/Empfänger, wenn die Rauschreserve für das "Downshift"-Zeitintervall unter die "Downshift"-Rauschreserve fällt oder für das "Upshift"-Zeitintervall über die "Upshift"-Rauschreserve ansteigt (4, 7), wobei der Prozess des Berechnens des Justierungsbetrags der Sendeleistung Folgendes umfasst: Berechnen einer neuen Verstärkung aus einer aktuellen Bitzuteilung und Verstärkungstabelle, einer aktuellen Rauschreserve, der "Upshift"-Rauschreserve und der "Downshift"-Rauschreserve; und
Senden des Justierungsbetrags der Sendeleistung von dem ersten Sender/Empfänger zu dem zweiten Sender/Empfänger, so dass der zweite Sender/Empfänger die Signalsendeleistung gemäß dem Justierungsbetrag justieren kann (10);
Empfangen einer Angabe eines Triggersignals von dem zweiten Sender/Empfänger in dem ersten Sender/Empfänger nach dem Senden des Justierungsbetrags der Sendeleistung einschließlich der neuen Verstärkung von dem ersten Sender/Empfänger zu dem zweiten Sender/Empfänger; und
Ausführen von Demodulation in dem ersten Sender/Empfänger unter Verwendung der neuen Verstärkung beim Empfang des Triggersignals.

2. Verfahren nach Anspruch 1, wobei der Prozess des Berechnens eines Justierungsbetrags der Sendeleistung in dem ersten Sender/Empfänger ferner Folgendes umfasst:
Berechnen einer neuen Bitzuteilung sowie einer neuen Verstärkung in dem ersten Sender/Empfänger aus der aktuellen Bitzuteilung und Verstärkungstabelle, der aktuellen Rauschreserve, der "Upshift"-Rauschreserve und der "Downshift"-Rauschreserve.

3. Verfahren nach Anspruch 1 oder 2, wobei der Justierungsbetrag der Sendeleistung für Subträger jeweils gleichförmig ist.

4. Verfahren nach Anspruch 1 oder 2, wobei der Prozess des Berechnens eines Justierungsbetrags der Sendeleistung in dem ersten Sender/Empfänger Folgendes umfasst:
Berechnen von verschiedenen Justierungsbeträgen der Verstärkung in dem ersten Sender/Empfänger, die auf verschiedene Subträger angewandt werden, unter Verwendung einer voreingestellten Gewichtungsregel.

5. Verfahren nach Anspruch 3, wobei die neue Verstärkung in der folgenden Gleichung berechnet wird: 20logGi'=20logGi-(NMGN-TMGN), wobei Gi' die neue Verstärkung, Gi die aktuelle Verstärkung, NMGN die aktuelle Rauschreserve und TMGN die Zielrauschreserve repräsentiert.

6. Verfahren nach Anspruch 1 oder 2, wobei, wenn durch Vergleichen bestimmt wird, dass die Rauschreserve über die "Upshift"-Rauschreserve ansteigt, das Verfahren Folgendes umfasst:
Freigeben eines Timers zum Starten des Timings in dem ersten Sender/Empfänger, wenn seine Rauschreserve über die "Upshift"-Rauschreserve ansteigt (3);
Erzeugen eines Triggersignals, wenn die Rauschreserve über der "Upshift"-Rauschreserve bleibt, wenn der Timer das "Upshift"-Timerintervall erreicht (4);
Löschen des Timers und Berechnen (7) und Senden des Justierungsbetrags der Sendeleistung durch den ersten Sender/Empfänger zu dem zweiten Sender/Empfänger als Reaktion auf das Triggersignal, so dass der zweite Sender/Empfänger die Signalsendeleistung gemäß dem Justierungsbetrag der Sendeleistung verkleinert.

7. Verfahren nach Anspruch 1 oder 2, wobei, wenn durch Vergleichen bestimmt wird, dass die Rauschreserve unter die "Downshift"-Rauschreserve fällt, das Verfahren Folgendes umfasst:
Freigeben eines Timers zum Starten des Timings in dem ersten Sender/Empfänger, wenn die Rauschreserve unter die "Downshift"-Rauschreserve fällt (3);
Senden eines Triggersignals, wenn die Rauschreserve unter der "Downshift"-Rauschreserve bleibt, wenn der Timer ein "Downshift"-Timerintervall erreicht (4);
Löschen des Timers und Berechnen eines Justierungsbetrags der Sendeleistung als Reaktion auf das Triggersignal in dem ersten Sender/Empfänger (7); und
Senden des Justierungsbetrags der Sendeleistung von dem ersten Sender/Empfänger zu dem zweiten Sender/Empfänger, so dass der zweite Sender/Empfänger die Signalsendeleistung gemäß dem Justierungsbetrag vergrößert.

8. Verfahren nach Anspruch 1 oder 2, wobei, wenn der Justierungsbetrag eine Obergrenze einer Leistungsspektraldichtemaske oder einer Gesamtleistungsbeschränkung übersteigt, das Verfahren Folgendes umfasst:
Senden der Obergrenze der Leistungsspektraldichtemaske oder der Gesamtleistungsbeschränkung von dem ersten Sender/Empfänger zu dem zweiten Sender/Empfänger, so dass der zweite Sender/Empfänger die Signalsendeleistung gemäß der Obergrenze justieren kann (8, 9).

9. Verfahren nach Anspruch 1 oder 2, wobei das Verfahren auf diskreter Mehrfrequenzmodulation basiert.

10. System zur Justierung der Sendeleistung eines Senders/Empfängers des digitalen Teilnehmeranschlusses, umfassend:
ein Signalsendemittel in einem einer Vermittlungsstelle CO und einer Teilnehmereinrichtung CPE, das dafür ausgelegt ist, ein Signal zu einem Anschluss zu senden, und ein Signalempfangsmittel in dem anderen von CO und CPE, das dafür ausgelegt ist, das Signal von dem Anschluss zu empfangen;
ein Rauschreserve-Erhaltemittel in dem einen von CO und CPE, das dafür ausgelegt ist, Informationen über eine Rauschreserve des durch das Empfangsmittel empfangene Signals zu erhalten; **dadurch gekennzeichnet, dass** es Folgendes umfasst:
ein Parameterkonfigurationsmodul in dem einen von CO und CPE, das dafür ausgelegt ist, eine "Upshift"-Rauschreserve, eine "Downshift"-Rauschreserve, eine Zielrauschreserve, ein "Upshift"-Zeitintervall und ein "Downshift"-Zeitintervall im Voraus zu empfangen und zu speichern, wobei die "Upshift"-Rauschreserve eine Obergrenze für eine Rauschreserveschwelle ist und die "Downshift"-Rauschreserve eine Untergrenze für die Rauschreserveschwelle ist;
einen Komparator in dem einen von CO und CPE, der dafür ausgelegt ist, die durch das Rauschreserve-Erhaltemittel erhaltene Rauschreserve mit der in dem Parameterkonfigurationsmodul in dem einen von CO und CPE gespeicherten "Upshift"-Rauschreserve und "Downshift"-Rauschreserve zu vergleichen und einen Timer zu triggern, das Timen zu starten, wenn die erhaltene Rauschreserve von dem Rauschreserve-Erhaltemittel nicht kleiner als die "Upshift"-Rauschreserve oder nicht größer als die "Downshift"-Rauschreserve ist;
einen Timer in dem einen von CO und CPE, der dafür ausgelegt ist, als Reaktion auf den Trigger von dem Komparator zu timen und ein Justierungsmittel in dem einen von CO und CPE zu triggern, wenn der Timer das "Upshift"-Zeitintervall oder das "Downshift"-Zeitintervall erreicht;
das Justierungsmittel ist dafür ausgelegt, einen Justierungsbetrag der Sendeleistung zu berechnen und zu dem anderen von CO und CPE zu senden, um es dem anderen von CO und CPE zu ermöglichen, die Signalsendeleistung gemäß dem Justierungsbetrag zu justieren, wobei das Justierungsmittel dafür ausgelegt ist, eine neue Verstärkung aus einer aktuellen Bitzuteilung und Verstärkungstabelle, einer aktuellen Rauschreserve, der "Upshift"-Rauschreserve und der "Downshift"-Rauschreserve zu berechnen; und
ein Ausführungsmittel in dem anderen von CO und CPE, das dafür ausgelegt ist, die Signalsendeleistung gemäß dem durch das andere von CO und CPE empfangenen Justierungsbetrag zu justieren und eine Angabe eines Triggersignals von dem anderen von CO und CPE zu dem einen von CO und CPE zu senden, so dass das eine von CO und CPE bei Empfang des Triggersignals Demodulation unter Verwendung des Justierungsbetrags ausführt.

11. System nach Anspruch 10, wobei das Justierungsmittel dafür ausgelegt ist, eine neue Bitzuteilung sowie die neue Verstärkung aus der aktuellen Bitzuteilung und Verstärkungstabelle, der aktuellen Rauschreserve, der "Upshift"-Rauschreserve und der "Downshift"-Rauschreserve zu berechnen.

12. Sender/Empfänger, umfassend:
ein Rauschreserve-Erhaltemittel, das dafür ausgelegt ist, eine Rauschreserve eines durch ein Empfangsmittel empfangenen Signals zu erhalten; und **gekennzeichnet durch**
ein Parameterkonfigurationsmodul, das dafür ausgelegt ist, eine "Upshift"-Rauschreserve, eine "Downshift"-Rauschreserve, eine Zielrauschreserve, ein "Upshift"-Zeitintervall und ein "Downshift"-Zeitintervall im Voraus zu empfangen und zu speichern, wobei die "Upshift"-Rauschreserve eine Obergrenze für die Rauschreserveschwelle ist und die "Downshift"-Rauschreserve eine Untergrenze für die Rauschreserveschwelle ist;
einen Komparator, der dafür ausgelegt ist, die erhaltene Rauschreserve mit der in einem Parameterkonfigurationsmodul gespeicherten "Upshift"-Rauschreserve und "Downshift"-Rauschreserve zu vergleichen;
einen Timer, der dafür ausgelegt ist, als Reaktion auf den Trigger von dem Komparator zu timen und ein Justierungsmittel zu triggern, wenn der Timer das "Upshift"-Zeitintervall oder das "Downshift"-Zeitintervall erreicht;
das Justierungsmodul, das dafür ausgelegt ist, einen Justierungsbetrag der Sendeleistung zu berechnen und zu einem entgegengesetzten Sender/Empfänger zu senden, um es dem entgegengesetzten Sender/Empfänger zu ermöglichen, die Signalsendeleistung gemäß dem Justierungsbetrag zu justieren, wobei das Justierungsmittel dafür ausgelegt ist, eine neue Verstärkung aus einer aktuellen Bitzuteilung und Verstärkungstabelle, einer aktuellen Rauschreserve, der "Upshift"-Rauschreserve und der "Downshift"-Rauschreserve zu berechnen;
wobei der Sender/Empfänger dafür ausgelegt ist, ein Triggersignal zu empfangen, nachdem das Justierungsmittel den Justierungsbetrag sendet, und beim Empfang des Triggersignals Demodulation unter Verwendung der neuen Verstärkung auszuführen.

13. Sender/Empfänger nach Anspruch 12, wobei das Justierungsmittel dafür ausgelegt ist, eine neue Bitzuteilung sowie die neue Verstärkung aus der aktuellen Bitzuteilung und Verstärkungstabelle, der aktuellen Rauschreserve, der "Upshift"-Rauschreserve und der "Downshift"-Rauschreserve zu berechnen.

## Revendications

1. Procédé pour ajuster la puissance de transmission d'un émetteur-récepteur de ligne d'abonné numérique, comprenant les étapes suivantes :
configurer une marge de bruit de montée, une marge de bruit de descente, une marge de bruit cible, un intervalle de temps de montée et un intervalle de temps de descente avant l'initialisation d'émetteurs-récepteurs, où la marge de bruit de montée est une limite supérieure d'un seuil de marge de bruit et la marge de bruit de descente est une limite inférieure du seuil de marge de bruit, où les émetteurs-récepteurs comprennent un premier émetteur-récepteur situé au niveau d'un dispositif parmi un central, CO, et un équipement des locaux d'abonné, CPE, et un second émetteur-récepteur situé au niveau de l'autre dispositif parmi le CO et le CPE ;
obtenir et comparer une marge de bruit au niveau du premier émetteur-récepteur à la marge de bruit de montée et la marge de bruit de descente (1, 2) ; **caractérisé par** les étapes suivantes :
calculer, au niveau du premier émetteur-récepteur, une quantité d'ajustement de la puissance de transmission lorsque la marge de bruit chute en-dessous de la marge de bruit de descente pendant l'intervalle de temps de descente ou s'élève au-dessus de la marge de bruit de montée pendant l'intervalle de temps de montée (4, 7), où le processus de calcul de la quantité d'ajustement de la puissance de transmission comprend de calculer un nouveau gain à partir d'une allocation de bits et d'une table de gain en cours, d'une marge de bruit en cours, de la marge de bruit de montée et de la marge de bruit de descente ; et
envoyer la quantité d'ajustement de la puissance de transmission du premier émetteur-récepteur au second émetteur-récepteur de manière à ce que le second émetteur-récepteur puisse ajuster la puissance de transmission du signal suivant la quantité d'ajustement (10) ;
recevoir une indication de signal de déclencheur du second émetteur-récepteur au niveau du premier émetteur-récepteur après l'envoi de la quantité d'ajustement de la puissance de transmission intégrant le nouveau gain, du premier émetteur-récepteur au second émetteur-récepteur ;
exécuter, au niveau du premier émetteur-récepteur, une démodulation en utilisant le nouveau gain à réception du signal de déclencheur.

2. Procédé selon la revendication 1, dans lequel le processus comprenant de calculer, au niveau du premier émetteur-récepteur, une quantité d'ajustement de la puissance de transmission, comprend en outre l'étape suivante :
calculer, au niveau du premier émetteur-récepteur, une nouvelle allocation de bits ainsi que le nouveau gain à partir de l'allocation de bits et de la table de gain en cours, de la marge de bruit en cours, de la marge de bruit de montée et de la marge de bruit de descente.

3. Procédé selon la revendication 1 ou la revendication 2, dans lequel la quantité d'ajustement de la puissance de transmission est uniforme pour chaque sous-porteuse.

4. Procédé selon la revendication 1 ou la revendication 2, dans lequel le processus comprenant de calculer, au niveau du premier émetteur-récepteur, une quantité d'ajustement de la puissance de transmission, comprend l'étape suivante :
calculer, au niveau du premier émetteur-récepteur, différentes amplitudes d'ajustement de gain appliquées à différentes sous-porteuses adoptant une règle de pondération prédéfinie.

5. Procédé selon la revendication 3, dans lequel le nouveau gain est calculé dans l'équation suivante : 20logGi' = 20logGi - (NMGN - TMGN), où Gi' représente le nouveau gain, Gi représente le gain en cours, NMGN représente la marge de bruit en cours et TMGN représente la marge de bruit cible.

6. Procédé selon la revendication 1 ou la revendication 2, dans lequel, lorsqu'il est déterminé que la marge de bruit s'élève au-dessus de la marge de bruit de montée par comparaison, le procédé comprend les étapes suivantes :
permettre à un minuteur de commencer le chronométrage au niveau du premier émetteur-récepteur lorsque sa marge de bruit s'élève au-dessus de la marge de bruit de montée (3) ;
générer un signal de déclencheur si la marge de bruit reste au-dessus de la marge de bruit de montée lorsque le minuteur atteint l'intervalle de temps de montée (4) ;
réinitialiser le minuteur et calculer (7) et envoyer, par le premier émetteur-récepteur, la quantité d'ajustement de la puissance de transmission au second émetteur-récepteur en réponse au signal de déclencheur, de manière à ce que le second émetteur-récepteur diminue la puissance de transmission du signal suivant la quantité d'ajustement de la puissance de transmission.

7. Procédé selon la revendication 1 ou la revendication 2, dans lequel, lorsqu'il est déterminé que la marge de bruit chute au-dessous de la marge de bruit de descente par comparaison, le procédé comprend les étapes suivantes :
permettre à un minuteur de commencer le chronométrage au niveau du premier émetteur-récepteur lorsque la marge de bruit chute au-dessous de la marge de bruit de descente (3) ;
envoyer un signal de déclencheur si la marge de bruit reste au-dessous de la marge de bruit de descente lorsque le minuteur atteint un intervalle de temps de descente (4) ;
réinitialiser le minuteur et calculer une quantité d'ajustement de la puissance de transmission en réponse au signal de déclencheur au niveau du premier émetteur-récepteur (7) ; et
envoyer la quantité d'ajustement de la puissance de transmission du premier émetteur-récepteur au second émetteur-récepteur, de manière à ce que le second émetteur-récepteur augmente la puissance de transmission du signal suivant la quantité d'ajustement.

8. Procédé selon la revendication 1 ou la revendication 2, dans lequel, lorsque la quantité d'ajustement dépasse une limite supérieure d'un masque de densité de spectre de puissance ou d'une restriction de puissance d'ensemble, le procédé comprend l'étape suivante :
envoyer la limite supérieure du masque de densité de spectre de puissance ou de la restriction de puissance d'ensemble du premier émetteur-récepteur au second émetteur-récepteur, de manière à ce que le second émetteur-récepteur puisse ajuster la puissance de transmission du signal suivant la limite supérieure (8, 9).

9. Procédé selon la revendication 1 ou la revendication 2, dans lequel le procédé est basé sur une modulation multitonalité discrète.

10. Système pour ajuster la puissance de transmission d'un émetteur-récepteur de ligne d'abonné numérique, comprenant :
un moyen d'envoi de signal au niveau soit d'un central, CO, soit d'un équipement des locaux d'abonné, CPE, conçu pour envoyer un signal à une ligne, et un moyen de réception de signal au niveau de l'autre dispositif parmi le CO et le CPE conçu pour recevoir le signal de la ligne ;
un moyen d'obtention de marge de bruit au niveau soit du CO, soit du CPE, conçu pour obtenir des informations sur une marge de bruit du signal reçu par le moyen de réception ; **caractérisé en ce qu'**il comprend :
un module de configuration de paramètres au niveau soit du central, CO, soit de l'équipement des locaux d'abonné, CPE, conçu pour recevoir et stocker une marge de bruit de montée, une marge de bruit de descente, une marge de bruit cible, un intervalle de temps de montée et un intervalle de temps de descente à l'avance, où la marge de bruit de montée est une limite supérieure d'un seuil de marge de bruit et la marge de bruit de descente est une limite inférieure du seuil de marge de bruit ;
un comparateur au niveau soit du CO, soit du CPE, conçu pour comparer la marge de bruit obtenue par le moyen d'obtention de marge de bruit à la marge de bruit de montée et la marge de bruit de descente stockées dans le module de configuration de paramètres au niveau soit du CO, soit du CPE, et pour déclencher un minuteur pour commencer le chronométrage lorsque la marge de bruit obtenue par le moyen d'obtention de marge de bruit n'est pas inférieure à la marge de bruit de montée ou n'est pas supérieure à la marge de bruit de descente ;
un minuteur au niveau soit du CO, soit du CPE, conçu pour chronométrer en réponse au déclencheur provenant du comparateur et pour déclencher un moyen d'ajustement au niveau soit du CO, soit du CPE, lorsque le minuteur atteint l'intervalle de temps de montée ou l'intervalle de temps de descente ;
le moyen d'ajustement est conçu pour calculer et envoyer une quantité d'ajustement de la puissance de transmission à l'autre dispositif parmi le CO et le CPE pour permettre à l'autre dispositif parmi le CO et le CPE d'ajuster une puissance de transmission de signal suivant la quantité d'ajustement, où le moyen d'ajustement est conçu pour calculer un nouveau gain à partir d'une allocation de bits et d'une table de gain en cours, d'une marge de bruit en cours, de la marge de bruit de montée et de la marge de bruit de descente ; et
un moyen d'exécution au niveau de l'autre dispositif parmi le CO et le CPE conçu pour ajuster une puissance de transmission de signal suivant la quantité d'ajustement reçue par l'autre dispositif parmi le CO et le CPE, et pour transmettre une indication de signal de déclencheur depuis l'autre dispositif parmi le CO et le CPE, au CO ou au CPE, de manière à ce que le CO ou le CPE exécute une démodulation en utilisant la quantité d'ajustement à réception du signal de déclencheur.

11. Système selon la revendication 10, dans lequel le moyen d'ajustement est conçu pour calculer une nouvelle allocation de bits ainsi que le nouveau gain à partir de l'allocation de bits et de la table de gain en cours, de la marge de bruit en cours, de la marge de bruit de montée et de la marge de bruit de descente.

12. Émetteur-récepteur comprenant :
un moyen d'obtention de marge de bruit, conçu pour obtenir une marge de bruit d'un signal reçu par un moyen de réception ; et **caractérisé par** :
un module de configuration de paramètres conçu pour recevoir et stocker une marge de bruit de montée, une marge de bruit de descente, une marge de bruit cible, un intervalle de temps de montée et un intervalle de temps de descente à l'avance, où la marge de bruit de montée est une limite supérieure du seuil de marge de bruit et la marge de bruit de descente est une limite inférieure du seuil de marge de bruit ;
un comparateur conçu pour comparer la marge de bruit obtenue à la marge de bruit de montée et la marge de bruit de descente stockées dans un module de configuration de paramètres ;
un minuteur conçu pour chronométrer en réponse au déclencheur provenant du comparateur et pour déclencher un moyen d'ajustement lorsque le minuteur atteint l'intervalle de temps de montée ou l'intervalle de temps de descente ;
le moyen d'ajustement est conçu pour calculer et envoyer une quantité d'ajustement de la puissance de transmission à un émetteur-récepteur opposé pour permettre à l'émetteur-récepteur opposé d'ajuster une puissance de transmission de signal suivant la quantité d'ajustement, où le moyen d'ajustement est conçu pour calculer un nouveau gain à partir d'une allocation de bits et d'une table de gain en cours, d'une marge de bruit en cours, de la marge de bruit de montée et de la marge de bruit de descente ;
où l'émetteur-récepteur est conçu pour recevoir un signal de déclencheur après que le moyen d'ajustement a envoyé la quantité d'ajustement et pour exécuter une démodulation en utilisant le nouveau gain à réception du signal de déclencheur.

13. Émetteur-récepteur selon la revendication 12, dans lequel le moyen d'ajustement est conçu pour calculer une nouvelle allocation de bits ainsi que le nouveau gain à partir de l'allocation de bits et de la table de gain en cours, de la marge de bruit en cours, de la marge de bruit de montée et de la marge de bruit de descente.
